# EUROPEAN PATENT APPLICATION

(11) **EP 1 435 675 A1**
(43) Date of publication of application: **07.07.2004**
(21) Application number: 02756040.8
(22) Date of filing: 16.08.2002
(51) Int. Cl.: H01M 12/06, H01M 10/40

(54) **ACCUMULATOR**

(30) Priority: 03.09.2001 RU 2001124009
(71) Applicant: Popov, Andrey Veniaminovich, St. Petersburg, 195027 (RU); Kuzmin, Gennady Yakovlevich, St. Petersburg, 193029 (RU)
(72) Inventor: Popov, Andrey Veniaminovich, St. Petersburg, 195027 (RU); Kuzmin, Gennady Yakovlevich, St. Petersburg, 193029 (RU)
(74) Representative: Helino, Timo
(86) International application number: PCT/RU2002/000395
(87) International publication number: WO 2003/021709

(57) **Abstract**

There is proposed a rechargeable battery containing a tank, a separator, a negative electrode, a positive electrode made of a carbon material, and electrolyte solution which contains halide ions, characterized in that the charged positive electrode contains adsorbed halogen.

## Description

### Field of the Invention

The invention relates to chemical power sources and can be used in production of secondary power sources, i.e. rechargeable batteries. In particular, the invention relates to batteries containing metal halides (halide ions and metal cations) in their electrolyte. When the battery is charged, a halide ion is oxidized into a corresponding halogen at the positive electrode. Simultaneously, a cation of the metal is reduced, mainly to the metal, at the negative electrode. When the battery discharges, inverse processes occur.

### Description of the Prior Art

Such rechargeable batteries, having a rather high capacity and good rechargeability are known (cf. US Patent No. 4,728,587, H01M 6/14, 1988). The known battery contains a tank, a separator, a positive electrode made of a carbon material, a negative electrode, and electrolyte solution containing metal halide dissolved in it. The battery is further provided with an additional container for separate storage of halogen in the form of a solution in organic, preferably halogenated, solvent. When the battery is charged, a halide ion is oxidized into halogen at a positive electrode. The halogen is transported with a stream of inert gas to the halogen storage container and is dissolved in the organic solvent. When the battery discharges, the halogen evaporated from the organic solvent and supplied with a stream of inert gas into the electrolyte is reduced to a halide ion. The battery has a relatively high capacity owing to the possibility to accumulate large amounts of halogens in a separate container.

The disadvantage of this known battery lies in the excessive complexity of its design requiring the presence of an additional container to store halogen and of an inert gas circulation system. Besides, when such a battery operates, it is necessary to cool and heat the halogen container during charging and discharging processes, respectively, which further complicates the battery design and adversely affects its specific characteristics and reliability. The complexity of the device does not allow such batteries, to be used widely, particularly with portable equipment.

The principal object of the invention is to create a rechargeable battery having a simple design, and a high specific capacity and rechargeability.

### Summary of the Invention

With the above principal object in view, there is proposed a battery containing a tank, a separator, a negative electrode, a positive electrode made of a carbon material, and electrolyte solution containing halide ions, wherein, according to the invention, the positive electrode in its charged state contains adsorbed chlorine in an amount of not less than 0.3 g, preferably 0.3-1.0 g, or adsorbed bromine in the amount of not less than 0.4 g, preferably 0.4 - 1.2 g, or adsorbed iodine in an amount of not less than 0.5 g, preferably 0.5-1.5 g, per 1 g of the carbon material; the carbon material having a specific surface ensuring adsorption of the said amounts of halogens.

The carbon material of the positive electrode can have a specific surface of not less than 500 m²/g.

The positive electrode can be made of a material selected from the group comprising activated carbon, graphite, activated graphite, activated carbon black, colloid carbon, pyrocarbon, and their mixtures. The carbon material of the positive electrode can be in the form of powder, paste, fabric, felt, carbon fibers, activated carbon filaments, granules, tablets, rods, or combinations of the above.

The negative electrode can contain a carbon material with a specific surface of not less than 300 m²/g or a material selected from the group including zinc, lithium, lithium alloy, and intercalated lithium.

The electrolyte solution can be an aqueous or non-aqueous solution.

In the proposed battery a method of accumulation of the adsorbed halogens on the surface of the positive electrode is used, which method makes it possible to do without a halogen storage container and inert gas circulation system, and thereby to simplify the device considerably and make it considerably cheaper. The above-indicated amounts of adsorbed halogens provide a high specific capacity of the battery. The upper limit of the indicated content of halogens approximately corresponds to their maximum possible amount that can be adsorbed on the carbon material.

The specific surface of the carbon material of the positive electrode shall preferably be not less than 500 m²/g. Specific surface values less than 500 m²/g do not provide adsorbtion of sufficient amounts of halogen under normal conditions. In practice, an upper limit of about 3,000 m²/g can be achieved for the carbon material specific surface at present. Usually the carbon material is microporous, with the radius of most pores being less than 1.5 nm.

The tank of the battery can be made of any suitable chemically resistant material, e.g. of stainless steel, and contain an electrolyte solution located inside the tank and containing halide ions, e.g. aqueous or non-aqueous solution of lithium chloride. The battery also has a positive electrode made of a carbon material, which has a sufficient specific surface, e.g. not less than 500 m²/g, and a negative electrode. The positive electrode can be made of a carbon material of any known type, e.g. of activated carbon, graphite, activated graphite, activated carbon black, colloid carbon, pyrocarbon, and their mixtures. The carbon material of the positive electrode can be in any form suitable for the battery of a given design, e. g. in the form of powder, paste, fabric, felt, carbon fibers, activated carbon filaments, granules, tablets, porous rods, and their combinations. In particular, activated carbon powder with highly porous surface can be placed in a small bag or pressed together with a suitable binder, such as Teflon, onto a grid, which can serve as electrical conductor. Paste can be obtained by blending the above-mentioned powder with some aqueous or non-aqueous liquid, e.g. with the solvent used in the electrolyte, with the paste being subsequently applied onto a grid or fabric. A porous rod can be manufactured, e.g., by carbonizing a carbon-containing substance, which can be a polymer, with the carbon being subsequently activated by one of known methods, e.g. by steam activation.

The negative electrode can contain metal, such as zinc, lithium, lithium alloy or intercalated lithium, or carbon material with a specific surface of not less than 300 m²/g.

The electrodes contact the electrolyte but not one another. Between the electrodes a separator can be placed. An ion-exchange membrane or porous dielectric material which is chemically resistant to the electrolyte and made of dielectric porous film permeable for ions, preferably polymeric film, or of dielectric grid can be used as the separator. The tank of the battery is usually sealed, preferably with some polymeric material, to prevent leakage of the electrolyte, penetration of water into the tank, and possible emission of halogen.

To obtain the required amounts of adsorbed halogens, the positive electrode shall be charged up to an electrode potential value which lies in the area of halide ion adsorption potentials. Halideanions from the solution are adsorbed at the positive electrode and give up electrons, turning into adsorbed atoms. It is known that the area of potentials at which halide ion adsorption occurs lies in the range from the equilibrium potential to a potential shifted from the equilibrium to the cathode potential approximately by 200-350 mV. In particular, for chlorine this area is in the range of approximately 1.00 to 1.35 V; for bromine, of approximately 0.80 to 1.08 V; and for iodine, of approximately 0.20 to 0.55 V, in relation to the standard hydrogen electrode. The ranges of adsorption potentials can be somewhat different from the above and depend on the nature of the electrolyte and solvent. If the electrode potential is lower than the lower limit of the above area, the halide ion adsorption is insignificant. When the electrode potential is higher than the equilibrium potential, the adsorption occurs and can be used for operation of the battery, but in such a case free halogen is also emitted, which can cause its diffusion towards the negative electrode and increase the battery self-discharge.

The required electrode potential on the positive electrode appears when the battery is charged with a certain amount of electricity, which is calculated on the basis of the technical characteristics (the active mass of the electrodes, the design capacity) of the battery. This is achieved by applying a current or voltage of an appropriate value to the electrodes during an appropriate time period. Then each electrode acquires a required electrode potential, which corresponds to the supplied amount of electricity and which can be measured, e.g. in relation to the standard hydrogen electrode.

The voltage on the battery will have other values than the electrode potential mentioned above, because it is measured between the battery electrodes (as electrode potential), not in relation to a reference standard hydrogen electrode, and depends on the used electrochemical system and thus on the electrode potential of the negative electrode as well. As a rule, this voltage is from 0.7 to 4.5 V.

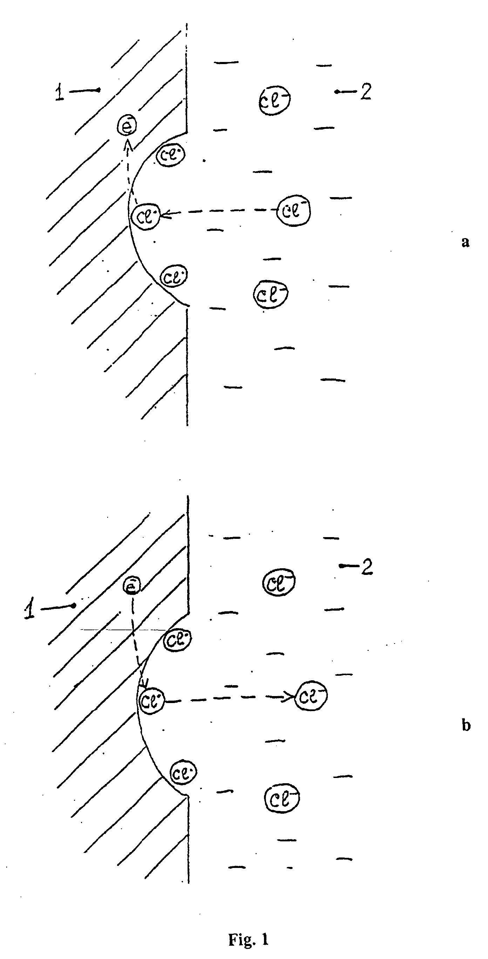

### Brief Description of the Drawing

The enclosed drawing illustrates the process of adsorption (a) and desorption (b) of a halide ion at the counter-electrode carbon material.

### Description of the Preferred Embodiments

When the battery is charged, positive electrode 1 manufactured of a carbon material is charged up to the adsorption potential of a corresponding halide ion; in such a case a halide ion from electrolyte 2 passes onto positive electrode 1 and gives up an electron, turning into a halogen atom, which is adsorbed at this electrode. During discharge, the inverse process during which transition of the adsorbed halogen atom which accepts the electron passes in the form of a halide ion into electrolyte 2 occurs. A high capacity of the battery is provided when positive electrode 1 has a high specific surface, preferably of not less than 500 m²/g, and the battery has a sufficient amount of halide ions, which provides accumulation of the necessary amount of halogen adsorbed at positive electrode 1.

When the battery is charged, known processes occur at the negative electrode, i.e. sedimentation of metal, which is present in metal halide, or intercolation of a metal cation, or charge of the double electrical layer at the carbon material with a high specific surface. When the battery discharges, corresponding inverse processes occur at the negative electrode, i.e. dissolution of metal through electro-chemical reactions, or deintercalation (e.g. of lithium from the carbon matrix), or discharge of the double electric layer at the carbon material with a high specific surface. The employment of lithium, especially intercalated lithium widely used in power sources, ensures a good rechargeability and a high capacity of the battery.

The invention is further explained with examples, which do not limit the invention scope.

### Example 1.

The battery contains a tank of stainless steel having a diameter of 14.4 mm and a height of 50 mm and is provided with a polypropylene seal. A graphite matrix, having a volume of 2.5 cm³ and containing intercalated lithium, is used as the negative electrode, the material for the positive electrode being activated carbon fabric (fabric made of carbon fibers) of 2.1 g in weight and with a specific surface of 1,200 m²/g. The material of the separator is porous polypropylene; the electrolyte contains a saturated lithium chloride solution in γ-butyrolactone with excessive solid phase. The battery was charged with a current of 150 mA for 8 hours, with the voltage gradually increased from 3.5 to 4.2 V. Analysis of a sample of the positive electrode carbon fabric in the charged state showed that it contained about 0.7 g of chlorine per I g of the fabric. The battery capacity was about 1.05 A*h during 100 cycles of recharge.

### Example 2.

The battery was made according to Example 1, except that the negative electrode was constituted by absorbent carbon powder with a specific surface of 1,500 m²/g and a volume of 4 cm³, and the material of the positive electrode was absorbent carbon with the same specific surface and a volume of 1.3 cm³ and in the form of a porous rod. Saturated water solution of potassium iodide was used as the electrolyte. The separator was constituted by an ion-exchange membrane. The battery was charged for 1 hour by applying 1.2 V voltage to the electrodes. Analysis of a sample of carbon from the positive electrode in the charged state showed that it contained about 1.1 g of iodine per 1 g of carbon. The battery capacity was about 0.15 A*h during 1,000 cycles of recharge.

### Example 3.

The battery was made according to Example 2, except that a solution of lithium bromide in γ-butyrolactone was used as the electrolyte; a porous carbon rod of 0.9 cm³ in volume and of 1,500 m²/g in specific surface was used as the positive electrode; and porous polypropylene was used as the separator. The battery was charged for 3 hours by applying 2,5 V voltage to the battery electrodes. Analysis of a sample of the positive electrode material in the charged state showed that it contained about 1.0 g of bromine per 1 g of carbon. The battery capacity was about 0.2 A*h during 1,000 cycles of recharge.

### Industrial applicability

The proposed battery, because of its simplicity, compactness, and a good capacity, can be used in portable autonomous equipment (watches, tape recorders, video cameras, mobile phones, etc.).

## Claims

1. A rechargeable battery containing a tank, a separator, a negative electrode, a positive electrode made of a carbon material and electrolyte solution which contains halide ions, **characterized in that** the positive electrode in its charged state contains adsorbed chlorine in an amount of not less than 0.3 g, or adsorbed bromine in an amount of not less than 0.4 g, or adsorbed iodine in an amount of not less than 0.5 g, per 1 g of the carbon material, the carbon material having a specific surface ensuring adsorption of the said amounts of halogens.

2. A rechargeable battery according to claim 1, **characterized in that** the carbon material of the positive electrode has a specific surface of not less than 500 m²/g.

3. A rechargeable battery according to claim 1 or 2, **characterized in that** that the positive electrode is made of a material selected from the group comprising activated carbon, graphite, activated graphite, activated carbon black, colloid carbon, pyrocarbon, and mixtures thereof.

4. A rechargeable battery according to any of claims 1-3, **characterized in that** that the carbon material of the positive electrode is in the form of powder, paste, fabric, felt, carbon fibers, activated carbon filaments, granules, tablets, rods, or their combinations.

5. A rechargeable battery according to any of claims 1-4, characterized i n that that the negative electrode contains a carbon material with a specific surface of not less than 300 m²/g.

6. A rechargeable battery according to any of claims 1-4, **characterized in that** that the negative electrode contains a material selected from the group including zinc, lithium, lithium alloy, and intercalated lithium.

7. A rechargeable battery according to any of claims 1-5, **characterized in that** that the electrolyte solution is an aqueous solution.

8. A rechargeable battery according to any of claims 1-6, **characterized in that** that the electrolyte solution is a non-aqueous solution.
